# EUROPEAN PATENT APPLICATION

(11) **EP 2 388 411 A1**
(43) Date of publication of application: **23.11.2011**
(21) Application number: 10163578.7
(22) Date of filing: 21.05.2010
(51) Int. Cl.: E04H 12/00, F03D 11/00

(54) **Wind turbine tower**

(71) Applicant: Siemens Aktiengesellschaft, 80333 München (DE)
(72) Inventor: Rasmussen, Anders Nygaard, 2200, Kobenhavn (DK)

(57) **Abstract**

The invention relates to a wind turbine tower. The tower contains a door opening, which is prepared to allow passage into the tower. The door opening is reinforced by a strip, which is attached to the circumference of the door opening by attachment means.

## Description

The invention relates to a tower of a wind turbine

Segmented steel towers with e.g. a circular or polygon cross-section are known.

A tower segment may contain a door opening, which degrades the mechanical properties of the segment. If the segment is part of a tower-construction the whole tower is also degraded or weakened by the door opening.

It is an object of the present invention to provide an improved tower of a wind turbine, which is not weakened by a door opening needed.

This object is reached by the features of claim 1. Improved embodiments are object of the dependent claims.

The wind turbine tower invented is preferably made of metal like steel and contains a door opening, which is prepared to allow passage into the tower. The door opening is located substantially at ground level. At least one strip, which is preferably made of metal like steel, is attached to the periphery of the door opening by attachment means.

A wind turbine tower is designed and constructed to carry the weight and loads of the rotor, nacelle and the tower itself. The present invention means that the wind turbine tower is reinforced around a door opening of the tower by one or more steel strips attached to the tower around the door opening. This reinforcement ensures that it is compensated for the opening in the tower construction, as the door opening create concentrated loads around its periphery due to the carried weight and loads.

According to the invention the strip reinforces the door opening, thus the tower itself is no longer weakened by the door opening.

The strip is prepared to compensate the missing material of the door opening gin the tower construction.

The strip is connected with the tower / with the wall of the tower by a number of bolted joints. Thus a welding in the steel tower close to the vicinity of the door opening is avoided. This ensures that the material and load properties of the tower are not weakened, especially in relation to fatigue load.

Preferably the tower and the strip are made of steel.

Preferably the tower is segmented along its horizontal and / or its vertical axis, referring to the tower erected. The tower segments might be pre-fabricated at a production site as standardised components, where at least one of the tower segments contains the door opening. This means that the invention can be established in horizontally and/or vertically segmented towers where at least one tower segment comprises the door opening. The present invention compensates for the opening and it can be ensured that the overall properties of the segment can match the load requirements.

Preferably the door opening overlaps a number of tower segments in such a way that adjacent tower segments forms the door opening.

The reinforced door opening can be established in conventional rolled steel towers or tower segments very easy.

Preferably the strip is segmented. Thus the strip can be mounted in segments around the door opening for its reinforcement. Thus the handling of the strip-parts during the installation of the strip is easy.

Additionally it is less complicated to produce the segmented parts of the strip.

Preferably the a first strip is attached to the outdoor periphery of the tower along the door opening, while a second strip is attached to the indoor periphery of the tower along the door opening.

Preferably the strip is profiled to enhance the compensation of forces, which are acting on the strip.

Preferably the strip is symmetrical to an imaginary axis, which extends in the longitudinal direction of the door opening. Thus symmetrical loads, which act on the reinforced door of the tower, are compensated.

Preferably the steel strip is constructed with alternating dimensions. For example its thickness and/or its width may be varied to withstand concentrated loads. This is made in a way that the strip does not contain excessive material at a dedicated position, where only minor loads are attacking. The variation also ensures that the strip follows the curvatures of the tower.

If the attachment means are a plurality of bolted joints the mounting of the reinforcement-strip can be made by hand without specialized tools.

Furthermore the assembling of the strip to the tower can be done external and at the installation site of the wind turbine tower.

Preferably the bolted joints pass through holes from the strip and into the wind turbine tower. Thus the strip is securely attached to the steel tower. If a segmented strip is used the joints ensure that the strips are closely attached to the steel tower and in relation to each other. Thus a symmetrical inner- and outer connection is established. Concentrated high loads are avoided, thus a strong reinforced construction is provided.

Preferably the bolted joints are friction joints. Thus strong joints are established where a bolt preload produces friction between the joined members. The strength of the joint depends on the frictional forces between the joined members.

Preferably the surfaces of the joined members (tower, strip and fixation members) are special treated for its use offshore. For example a specific roughness and/or specific friction properties may be ensured.

Preferably the attachment means, used to connect the strip with the tower, might be an adhesive. Adhesives offer several advantages as they are cheap and can be used in a very easy way.

Preferably the adhesive used is a component adhesive, known as "two-part no-mix acrylics", "two-part mix acrylics", "two-part epoxie", "polyurethane" or even "cyano-acrylate".

The invention is shown in more detail by help of drawings. The drawings show preferably configurations and thus do not limit the scope of the invention or of the claims.
FIG 1 shows the relevant part of the tower invented,
FIG 2 shows the shape of the strip, which is used as reinforcement of the door opening of FIG 1,
FIG 3 shows a cross sectional view of a first reinforced door opening according to the invention,
FIG 4 shows a cross sectional view of a second reinforced door opening according to the invention, and
FIG 5 shows a cross sectional view of a third reinforced door opening according to the invention.

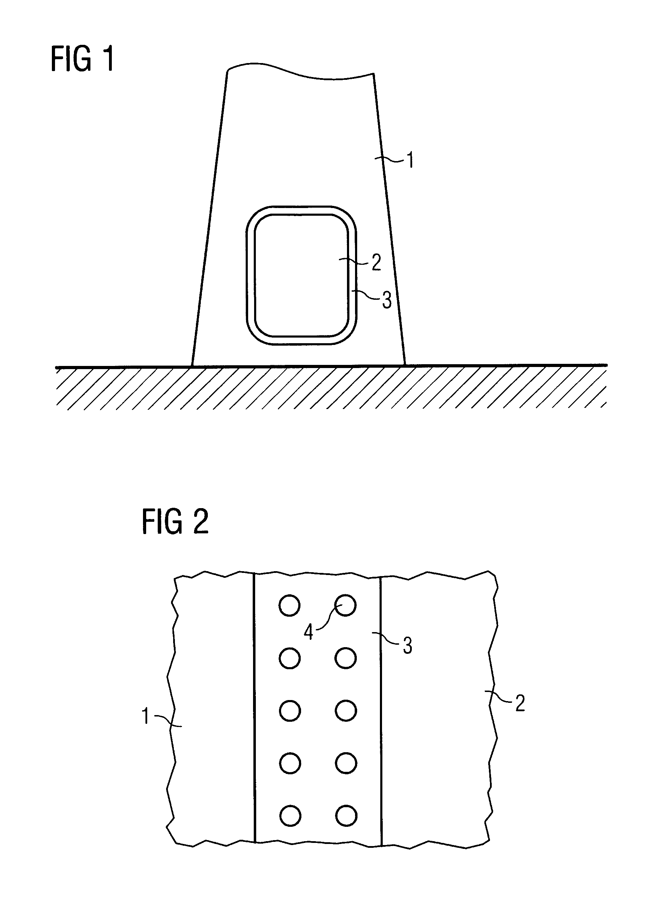

FIG 1 shows the relevant lower part of the tower 1 invented. The lower part of the tower 1 contains 1 a door opening 2, which is reinforced by a strip 3, which is attached to the wall of the tower 1.

The tower 1 is constructed and prepared to carry the weight and loads of the rotor, of the nacelle and of the tower itself and to withstand aero-dynamic forces, which act on the blades of the wind turbine.

The door opening 2 is normally located very near to a ground level of the wind turbine.

Preferably the tower 1 is made of metal like steel.

FIG 2 shows the shape of the strip 3, which is used as reinforcement of the door opening 2 of FIG 1.

The strip 3 is preferably made of steel. It is attached to the wall of the tower 1 along the circumference of the door opening 2.

The strip 3 contains a number of holes 4 for example, which are used to connect the strip 3 with the tower 1, by bolted joints for example.

The holes 4 for the joints may be varied: they may be distributed along a single row, along a double row as shown here or in any other configuration, which depends on the needed properties.

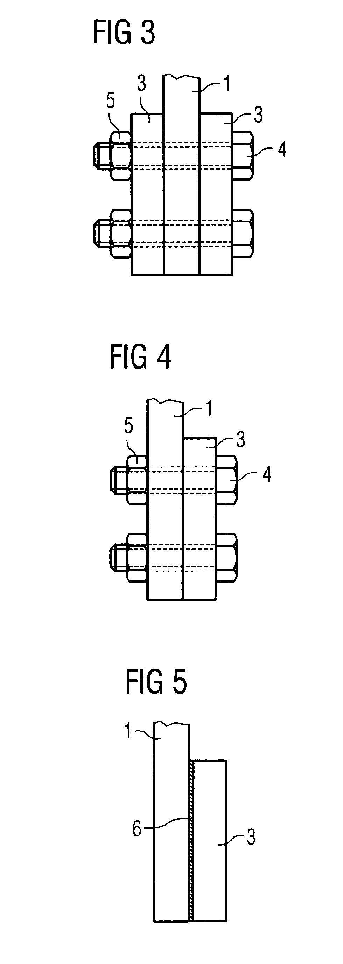

FIG 3 shows a cross sectional view of a first reinforced door opening according to the invention.

Two profiled steel strips 3 are attached to the wall of the tower 1 by bolted joints 4 and 5.

The tower 1 and the strips 3 comprise holes for the bolts 4, which are secured by nuts 5.

The bolted joints may comprise components like washers and/or bolt locks if needed (not shown here).

The two strips 3 shown here are attached to the inner and to the outer side of the door opening 2 in reference to FIG 1.

FIG 4 shows a cross sectional view of a second reinforced door opening according to the invention.

One profiled steel strip 3 is attached to the wall of the tower 1 by bolted joints 4 and 5.

The tower 1 and the strip 3 comprise holes for the bolts 4, which are secured by nuts 5.

FIG 5 shows a cross sectional view of a third reinforced door opening according to the invention.

One profiled steel strip 3 is attached to the wall of the tower 1 by an adhesive 6.

Thus referring to the figures FIG 2 to FIG 4 there is no longer the need to drill a huge number of holes into the structure.

This in additionally ensures that the total tower construction is not weakened in regard to the loads and in regard to the material.

## Claims

1. Wind turbine tower,
- where the tower contains a door opening, which is prepared to allow passage into the tower,
- where the door opening is reinforced by a strip, which is attached to the circumference of the door opening by attachment means.

2. Wind turbine tower according to claim 1, where the strip contains a number of holes for a bolted-connection with the wall of the tower.

3. Wind turbine tower according to claim 1, where the strip is connected with the tower by an adhesive.

4. Wind turbine tower according to claim 1,
- where the strip is profiled to enhance the compensation of forces, which are acting on the strip, and/or
- where the strip is constructed with alternating dimensions like an alternating thickness and/or width.

5. Wind turbine tower according to claim 1, where the tower and or the strip are made of metal like steel.

6. Wind turbine tower according to claim 1, where the door opening is located substantially at a wind turbine ground level.

7. Wind turbine tower according to claim 1,
- where the tower and/or the strip is segmented along the horizontal axis of the tower erected, or
- where the tower and/or the strip is segmented along the vertical axis of the tower erected.

8. Wind turbine tower according to claim 1, where a first strip is attached to the outdoor periphery of the tower along the door opening while a second strip is attached to the indoor periphery of the tower along the door opening.
